# EUROPEAN PATENT APPLICATION

(11) **EP 2 977 672 A1**
(43) Date of publication of application: **27.01.2016**
(21) Application number: 15178037.6
(22) Date of filing: 23.07.2015
(51) Int. Cl.: F21S 8/10, F21V 8/00, F21V 17/00

(54) **VEHICLE LIGHTING UNIT**

(30) Priority: 25.07.2014 JP 2014151406
(71) Applicant: Stanley Electric Co., Ltd., Meguro-ku Tokyo 153-8636 (JP)
(72) Inventor: MARUYAMA, Tatsuya, Tokyo, 153-8636 (JP)
(74) Representative: Wimmer, Hubert

(57) **Abstract**

A vehicle lighting unit (1) can accurately dispose the light incident portion (21) of a light guiding member (2) and a light source (41) with respect to each other while the light guiding member (2) can be exposed on the front side without the provision of a large opening to a supporting member (3) for supporting the light guiding member (2). The vehicle lighting unit (1) can include an LED substrate (4) in which an LED (41) is installed, a light guiding member (2) having a light incident portion (21) on which light from the LED (41) can be incident, and an extension (3) configured to support the light guiding member (2). The extension (3) can have an insertion hole (31a) formed therein, through which the light incident portion (21) of the light guiding member (2) is inserted from a front side thereof. The LED substrate (4) can be disposed so that the LED (41) faces and approaches to the insertion hole (31a) of the extension (3) and attached to the extension (3) from its rear side through a bracket (5) so that the LED substrate (4) is secured to a rear surface of the bracket (5). The bracket (5) can have a guiding portion (51) configured to guide the light incident portion (21) of the light guiding member (2) to be inserted to the insertion hole (31a) to allow the light incident portion (21) to face the LED (41).

## Description

### Technical Field

The present invention relates to vehicle lighting units, and in particular, to a vehicle lighting unit that includes an LED light source and a light guiding member supported by a supporting member and that can project light from the LED light source.

### Background Art

Various vehicle lighting units to be installed in a vehicle body have conventionally been known and examples thereof may include ones that can emit light forward through a light guiding body (for example, Japanese Patent Application Laid-Open No. 2008-77889 (or US 2008/0175017A1 corresponding thereto)).

In general, this type of vehicle lighting unit can include a light source such as a light emitting diode (LED) mounted on an LED substrate, and a light guiding member including a light incident portion. In order to position the light incident portion of the light guiding member and the LED without fail, the LED substrate can be directly secured to the light guiding member, for example, by means of screwing. Then, the light guiding member to which the LED substrate has been secured can be attached to a supporting member such as an extension from its rear side so as not to expose the LED substrate on the front side thereof.

With this configuration in which the light guiding member is attached to the supporting member from its rear side, the supporting member should have a larger opening to expose the light exiting portion of the light guiding member forward in order to allow the light guiding member to project light forward. The provision of the opening to the supporting member may decrease the mechanical strength of the supporting member. Furthermore, the problem may arise in which a cover member is provided to portions where any light leakage through the opening should be prevented.

### Summary

The present invention was devised in view of these and other problems and features in association with the conventional art. According to an aspect of the present invention, a vehicle lighting unit can accurately dispose the light incident portion of a light guiding member and a light source with respect to each other while the light guiding member can be exposed on the front side without the provision of a large opening to a supporting member for supporting the light guiding member.

According to another aspect of the present invention, a vehicle lighting unit can include a light source, such as a light emitting diode (LED), a substrate (LED substrate) in which the light source (LED) is installed, a light guiding member having a light incident portion on which light from the light source (LED) can be incident, and a supporting member configured to support the light guiding member. The supporting member can have an insertion hole formed therein, through which the light incident portion of the light guiding member is inserted from a front side thereof. The substrate (LED substrate) can be disposed so that the light source (LED) faces and approaches to the insertion hole of the supporting member and attached to the supporting member from its rear side through a securing member so that the substrate (LED substrate) is secured to a rear surface of the securing member. The securing member can have a guiding portion that is configured to guide the light incident portion of the light guiding member to be inserted to the insertion hole to allow the light incident portion to face the light source (LED).

In the vehicle lighting unit according to the above aspect, the guiding portion can have a guiding hole configured to expose the light source (LED) therethrough and be positioned in the rear of the insertion hole and narrowed in diameter rearwards.

In the vehicle lighting unit according to the above aspect, the guiding hole can have an inner peripheral wall on which a rib is formed to erect thereon, the rib used for positioning (centering) the light incident portion of the light guiding member. In this case, the rib may be composed of three or more ribs formed to erect on the inner peripheral wall at constant circumferential intervals and extend along a center axis of the guiding hole in a front-to-rear direction.

In the vehicle lighting unit according to the aspect of the present invention, while the substrate (LED substrate) is secured to the rear surface of the supporting member via the securing member, the light incident portion of the light guiding member can be inserted into the insertion hole from its front side, to thereby allowing the light incident portion to be guided by the guiding portion of the securing member. This can cause the light incident portion to face to the light source (LED) on the substrate (LED substrate).

Therefore, unlike the conventional structure where the light guiding member is attached to the supporting member from its rear side, there is no need to form a large opening in the supporting member that supports the light guiding member, but there is provided only a small insertion hole to receive the light incident portion of the light guiding member. This configuration can allow the light incident portion of the light guiding member and the light source (LED) to be favorably positioned while the light guiding member is exposed forward.

Furthermore, when the guiding portion configured to guide the light incident portion of the light guiding member can have the guiding hole configured to expose the light source (LED) therethrough forward and be positioned in the rear of the insertion hole and narrowed in diameter rearwards, the insertion of the light incident portion of the light guiding member into the insertion hole from its front side can allow the light incident portion to be guided along the guiding hole and face to the light source (LED) on the substrate (LED substrate). Therefore, this configuration can allow the light incident portion of the light guiding member and the light source (LED) to easily and accurately be positioned to each other.

Furthermore, when the rib(s) is(are) formed to erect on the inner peripheral wall of the guiding hole configured to center the light incident portion of the light guiding member, the insertion of the light incident portion of the light guiding member into the insertion hole from its front side can allow the light incident portion to be guided along the rib(s) of the guiding hole and positioned (centered) to face to the light source (LED) on the substrate (LED substrate). Therefore, this configuration can allow the light incident portion of the light guiding member and the light source (LED) to more easily and accurately be positioned to each other.

### Brief Description of Drawings

These and other characteristics, features, and advantages of the present invention will become clear from the following description with reference to the accompanying drawings, wherein:
FIG. 1 is a perspective view illustrating essential parts of a vehicle lighting unit in an exemplary embodiment made in accordance with principles of the present invention;
FIG. 2 is an exploded perspective view of the essential parts of the vehicle lighting unit in FIG. 1;
FIG. 3 is a cross-sectional view taken along line III-III in FIG. 1;
FIG. 4 is a cross-sectional view taken along line IV-IV in FIG. 1;
FIG. 5 is a cross-sectional view taken along line V-V in FIG. 1; and
FIG. 6 is a perspective view illustrating a guiding portion of a bracket in this exemplary embodiment.

### Description of Exemplary Embodiments

A description will now be made below to vehicle lighting units of the present invention with reference to the accompanying drawings in accordance with exemplary embodiments.

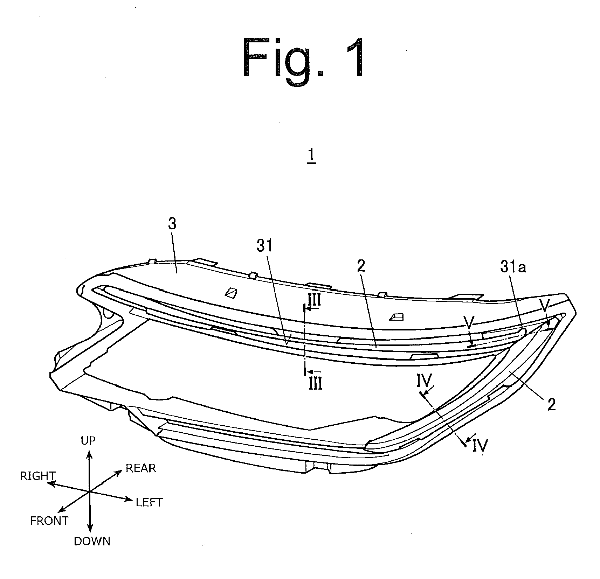

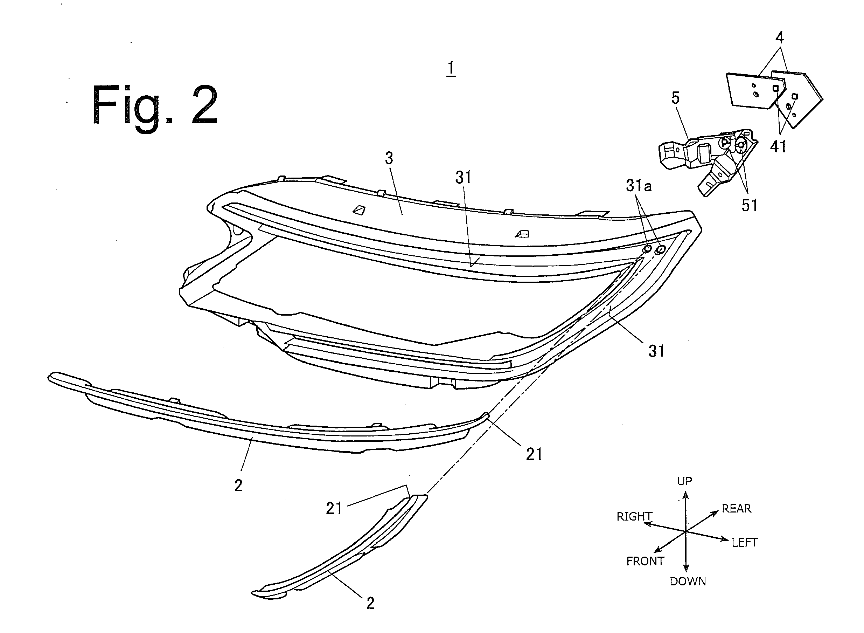

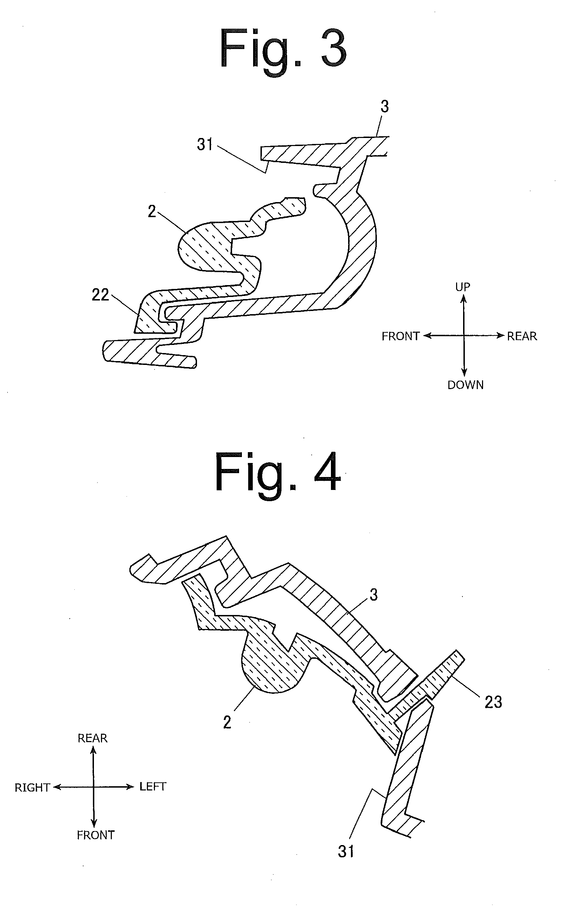

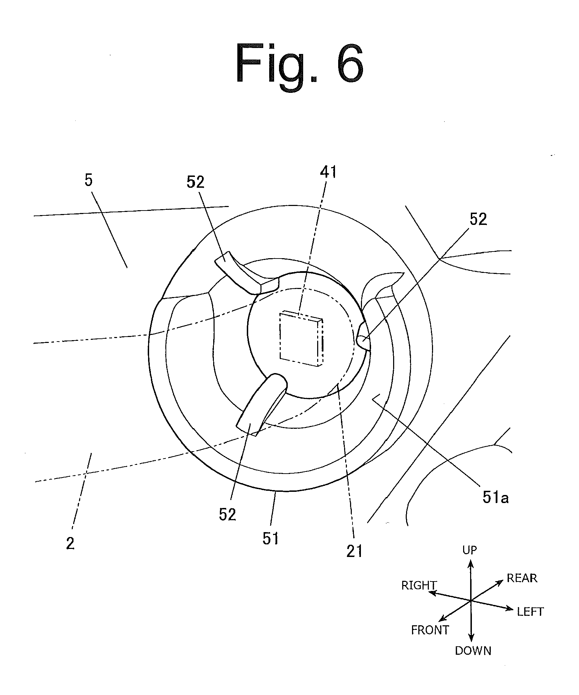

FIGS. 1 and 2 are a perspective view and an exploded perspective view illustrating essential parts of a vehicle lighting unit in an exemplary embodiment made in accordance with principles of the present invention, respectively. FIGS. 3, 4, and 5 are cross-sectional views taken along respective lines III-III, IV-IV, and V-V in FIG. 1, respectively. FIG. 6 is a perspective view illustrating a guiding portion (51) of a bracket (5) included in the vehicle lighting unit 1.

Incidentally, the "front (forward)," "rear, back (rearward, backward)," "left (leftward)," "right (rightward)," "upper (upward)," and "down (downward)" used herein mean the directions with respect to the vehicle lighting unit 1 used as a headlamp unit installed in the front portion of a vehicle body, unless otherwise specified.

As illustrated in FIGS. 1 and 2, the vehicle lighting unit 1 can include two light guiding members 2, an extension 3, two LED substrates 4 and a bracket 5.

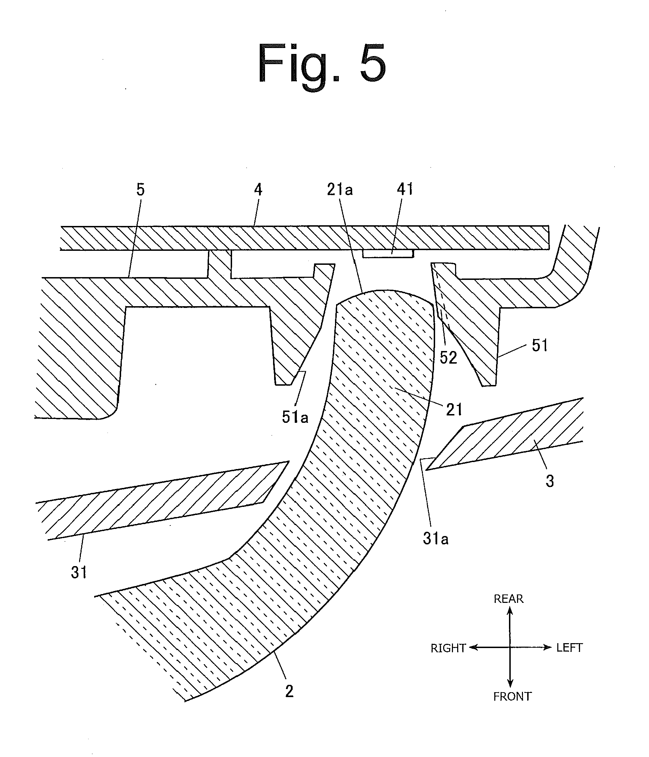

The two light guiding members 2 can each be configured to be an elongated light guiding bar having a light incident portion 21 at one longitudinal end. The light incident portion 21 can be configured to allow the light to be incident thereon and enter the light guiding member 2. The light incident portion 21 can be bent to direct its tip end rearward and have its tip end face (rear end face) as a light incident face 21a, as illustrated in FIG. 5. Each of the light guiding members 2 can receive the light incident on the light incident portion 21 and be illuminated with light entirely along its length (or configured to project light through the elongated front face thereof).

The extension 3 can be a designed part conjured to decorate the peripheral edges of not-shown main light emitting parts of the vehicle lighting unit 1, and formed to have a substantial rectangular frame shape having a large center opening to expose the main light emitting parts therethrough. The extension 3 can serve as a supporting member for the two light guiding members 2, and have supporting grooves 31 in the upper side and left side thereof configured to support the two light guiding members 2.

The supporting groove 31 can be formed as an elongated groove opened frontward, as illustrated in FIGS. 3 and 4, so that the light guiding member 2 can be contained therein from its front side. The light guiding member 2 can have a locking part 22 and a locking projection 23 to be engaged with the supporting groove 31, so that the light guiding member 2 can be secured to the extension 3 within the supporting groove 31 with the locking part 22 and the locking projection 23.

As illustrated in FIG .2, an insertion hole 31a into which the light incident portion 21 of the light guiding member 2 can be inserted can be formed at one longitudinal end of the supporting groove 31. The insertion hole 31a can be a through hole penetrating the supporting groove 31 at its bottom portion in the front-to-rear direction, so that the light incident portion 21 of the light guiding member 2 can be inserted thereinto from its front side.

The two LED substrates 4 correspond to the two light guiding members 2. Light emitting diodes (LEDs) 41 can be mounted to the corresponding LED substrates 4 so that they can illuminate the corresponding light guiding members 2. These two LED substrates 4 can be secured to the extension 3 with the aid of the bracket 5.

The bracket 5 can be a plate-like securing member configured to secure the two LED substrates 4 to the extension 3, and, as illustrated in FIGS. 5 and 6, the two LED substrates 4 can be secured to the bracket 5 on its rear surface and the bracket 5 can be attached to the extension 3 from its rear side. More specifically, the bracket 5 can be secured to the extension 3 in such a condition in which the respective LEDs 41 of the LED substrates 4 attached to the bracket 5 can face and approach to the corresponding insertion holes 31a formed in the extension 3 through the guiding holes 51a to be described later.

The bracket 5 can have guiding portions 51 formed at respective positions between the LEDs 41 and the insertion holes 31a and configured to guide the corresponding light incident portions 21 of the light guiding member 2. The guiding portions 51 can be formed in a cylindrical shape projecting forward and each have a guiding hole 51a (through hole).

The guiding hole 51a can be configured to expose the LED 41 therethrough and be positioned in the rear of the insertion hole 31a and narrowed in diameter rearwards. Thus, the light incident face 21a of the light incident portion 21 inserted into the insertion hole 31a from its front side can be guided to face to the LED 41.

Furthermore, on the rear half of the inner peripheral wall of the guiding hole 51a, three ribs 52 can be formed to erect thereon and extend along the center axis of the guiding hole 51a at constant circumferential intervals. The three rings 52 can allow the light incident portion 21 of the light guiding member 2 to be guided along the ribs 52 and positioned (centered). Thus, the light incident face 21a of the light incident portion 21 inserted into the insertion hole 31a from its front side can be guided to be easily and accurately positioned (centered) with respect to the LED 41.

In the vehicle lighting unit according to the aspect of the present invention, as described above, while the LED substrate 4 (substrate) can be secured to the rear surface of the extension 3 (supporting member) via the bracket 5 (securing member), the light incident portion 21 of the light guiding member 2 can be inserted into the insertion hole 31a of the extension 3 from its front side, to thereby allowing the light incident portion 21 to be guided by the guiding portion 51 of the bracket 5. This can cause the light incident portion 21 to face to the LED 41 on the LED substrate 4.

Therefore, unlike the conventional structure where the light guiding member is attached to the supporting member from its rear side, there is no need to form a large opening in the extension 3 that supports the light guiding member 2, but there is provided only a small insertion hole 31a to receive the light incident portion 21 of the light guiding member 2. This configuration can allow the light incident portion 21 of the light guiding member 2 and the corresponding LED 41 to be favorably positioned while the light guiding member 2 is exposed forward.

Furthermore, when the guiding portion 51 configured to guide the light incident portion 21 of the light guiding member 2 can have the guiding hole 51a configured to expose the LED 41 therethrough forward and be positioned in the rear of the insertion hole 31a and narrowed in diameter rearwards, the insertion of the light incident portion 21 of the light guiding member 2 into the insertion hole 31a from its front side can allow the light incident portion 21 to be guided along the guiding hole 51a and face to the LED 41 on the LED substrate 4. Therefore, this configuration can allow the light incident portion 21 of the light guiding member 2 and the LED 4 to easily and accurately be positioned to each other.

Furthermore, when the ribs 52 are formed to erect on the inner peripheral wall of the guiding hole 51a configured to center the light incident portion 21 of the light guiding member 2, the insertion of the light incident portion 21 of the light guiding member 2 into the insertion hole 31a from its front side can allow the light incident portion 21 to be guided along the ribs 52 of the guiding hole 51a and positioned (centered) to face to the LED 41 on the LED substrate 4. Therefore, this configuration can allow the light incident portion 21 of the light guiding member 2 and the LED 41 to more easily and accurately be positioned to each other.

It will be apparent to those skilled in the art that various modifications and variations can be made in the present invention without departing from the spirit or scope of the present invention. Thus, it is intended that the present invention cover the modifications and variations of the present invention provided they come within the scope of the appended claims and their equivalents. All related art references described above are hereby incorporated in their entirety by reference.

For example, although the extension 3 is exemplified as the supporting member configured to support the light guiding member 2 in the above exemplary embodiment, the supporting member is not limited thereto.

Furthermore, the light guiding bar is exemplified as the light guiding member 2, which is not limitative. An inner lens configured to control light intensity distribution of light from an LED may serve as the light guiding member 2.

The vehicle lighting unit made in accordance with the present invention is used as the vehicle headlamp unit as one example, which is not limitative. Examples thereof may include, in addition to a headlamp, a rear-combination lamp. Furthermore, the vehicle lighting unit made in accordance with the present invention can be appropriately used as a position lamp, a tail lamp, or an accessory lamp.

The number of ribs is not limited to three, but may be one or two or more than three in accordance with the required specification.

## Claims

1. A vehicle lighting unit (1) comprising:
a light source (41);
a substrate (4) in which the light source (41) is installed;
a light guiding member (2) having a light incident portion (21) on which light from the light source (41) can be incident; and
a supporting member (3) configured to support the light guiding member (2), wherein
the supporting member (3) has an insertion hole (31a) formed therein, through which the light incident portion (21) of the light guiding member (2) is inserted from a front side thereof,
the substrate (4) is disposed so that the light source (41) faces and approaches to the insertion hole (31a) of the supporting member (3) and attached to the supporting member (3) from a rear side of the supporting member (3) through a securing member (5) so that the substrate (4) is secured to a rear surface of the securing member (5), and
the securing member (5) has a guiding portion (51) that is configured to guide the light incident portion (21) of the light guiding member (2) to be inserted to the insertion hole (31a) to allow the light incident portion (21) to face the light source (41).

2. The vehicle lighting unit (1) according to claim 1,
wherein the guiding portion (51) has a guiding hole (51a) configured to expose the light source (41) therethrough and be positioned in the rear of the insertion hole (31a) and narrowed in diameter rearwards.

3. The vehicle lighting unit (1) according to claim 2,
wherein the guiding hole (51a) has an inner peripheral wall on which a rib (52) is formed to erect thereon, the rib (52) used for positioning the light incident portion (21) of the light guiding member (2).

4. The vehicle lighting unit (1) according to claim 3,
wherein the rib (52) is composed of three ribs (52) formed to erect on the inner peripheral wall at constant circumferential intervals and extend along a center axis of the guiding hole (51a) in a front-to-rear direction.

5. The vehicle lighting unit (1) according to any one of claims 1 to 4, wherein the light source (41) is a light emitting diode (41).
